# EUROPEAN PATENT APPLICATION

(11) **EP 4 835 662 A1**
(43) Date of publication of application: **04.11.2026**
(21) Application number: 24921347.1
(22) Date of filing: 01.08.2024
(51) Int. Cl.: G06F 9/48

(54) **METHOD AND APPARATUS FOR DETERMINING EXECUTION TASK IN SUPERMARKET SCENARIO, AND DEVICE**

(30) Priority: 30.01.2024 CN 202410132828
(71) Applicant: Hanshow Technology Co., Ltd., Jiaxing, Zhejiang 314000 (CN)
(72) Inventor: YU, Mingming, Jiaxing, Zhejiang 314000 (CN); GU, Hanchao, Jiaxing, Zhejiang 314000 (CN); ZHAO, Jianguo, Jiaxing, Zhejiang 314000 (CN); GAO, Bo, Jiaxing, Zhejiang 314000 (CN); LIANG, Min, Jiaxing, Zhejiang 314000 (CN)
(74) Representative: Carangelo, Pierluigi
(86) International application number: PCT/CN2024/109239
(87) International publication number: WO 2025/161315

(57) **Abstract**

Provided are a method and apparatus for determining a to-be-executed task in a supermarket scenario and a device. The method is applied to an integrated base station. The method includes: receiving a supermarket service analysis instruction, sending a terminal data instruction to a target data terminal, and obtaining supermarket data information based on feedback from the target data terminal (S101); distributing the supermarket data information to other integrated base stations, and obtaining, based on feedback from the other integrated base stations, a supermarket item analysis result corresponding to a target supermarket item (S102); and feeding back the supermarket item analysis result to a supermarket service management platform, so as to enable the supermarket service management platform to perform task identification for the target supermarket item and determine a to-be-executed item task corresponding to the target supermarket item (S103).

## Description

### CROSS-REFERENCE TO RELATED APPLICATION(S)

This application claims priority to Chinese Patent Application No. 202410132828.6 filed with the China National Intellectual Property Administration (CNIPA) on Jan. 30, 2024, the disclosure of which is incorporated herein by reference in its entirety.

### TECHNICAL FIELD

The present application relates to the technical field of supermarket item management, for example, a method and apparatus for determining a to-be-executed task in a supermarket scenario, and a device.

### BACKGROUND

With the further development of digitization, automation, and intelligence in the traditional supermarket industry, various new demands in this field are continuously emerging, such as out-of-stock inspection of commodities, hot commodity analysis, and analysis of hotspot customer traffic paths through images or videos. To meet these application demands, on the one hand, video and image collection devices such as automatic inspection robots and cameras need to be installed, and on the other hand, computing power resource devices that meet such application demands also need to be deployed as supporting devices.

In the existing solutions, to meet the demand for computing power, independent high-performance servers are usually deployed simultaneously in supermarket premises. The cameras and the robots transmit collected original images and videos to a gateway device over a wireless network, and the gateway device uniformly forwards the images and videos to the servers providing computing power resources. The servers complete all processing and analysis tasks.

Since the data volume of the original images and videos is relatively large, the transmission of the data to the servers through the gateway may occupy the bandwidth resources of user networks. In relatively large-scale supermarket scenarios, there is a large number of cameras and mobile robots, resulting in a huge volume of service data. If the data is transmitted through the network simultaneously, it may strain the supermarket network, thereby affecting the user's production services.

### SUMMARY

The present application provides a method and apparatus for determining a to-be-executed task in a supermarket scenario and a device, so as to reduce the occupation of bandwidth resources, and simultaneously assist in determining an analysis by utilizing computing power of other integrated base stations, thereby alleviating the consumption of computing power resources and further improving the efficiency and accuracy of determining to-be-executed tasks for supermarket items.

An embodiment of the present application provides a method for determining a to-be-executed task in a supermarket scenario. The method is applied to an integrated base station. The method includes: receiving a supermarket service analysis instruction, sending a terminal data instruction to a target data terminal, and obtaining supermarket data information based on feedback from the target data terminal, where the supermarket data information includes at least item attribute information corresponding to a target supermarket item; distributing the supermarket data information to other integrated base stations, and obtaining, based on feedback from the other integrated base stations, a supermarket item analysis result corresponding to the target supermarket item; and feeding back the supermarket item analysis result to a supermarket service management platform, so as to enable the supermarket service management platform to perform task identification for the target supermarket item and determine a to-be-executed item task corresponding to the target supermarket item.

An embodiment of the present application provides an apparatus for determining a to-be-executed task in a supermarket scenario. The apparatus is applied to an integrated base station. The apparatus includes: a supermarket data information acquisition module configured to receive a supermarket service analysis instruction, send a terminal data instruction to a target data terminal, and obtain supermarket data information based on feedback from the target data terminal, where the supermarket data information includes at least item attribute information corresponding to a target supermarket item; a supermarket item analysis result determination module configured to distribute the supermarket data information to other integrated base stations and obtain, based on feedback from the other integrated base stations, a supermarket item analysis result corresponding to the target supermarket item; and a to-be-executed item task determination module configured to feed back the supermarket item analysis result to a supermarket service management platform, so as to enable the supermarket service management platform to perform task identification for the target supermarket item and determine a to-be-executed item task corresponding to the target supermarket item.

An embodiment of the present application provides an electronic device. The electronic device includes at least one processor and a memory communicatively connected to the at least one processor. The memory stores a computer program executable by the at least one processor, and the computer program is executed by the at least one processor, so as to enable the at least one processor to perform the method for determining a to-be-executed task in a supermarket scenario according to any one of embodiments of the present application.

### BRIEF DESCRIPTION OF DRAWINGS

Drawings used in the description of embodiments are briefly described below. Apparently, the drawings described below illustrate only part of the embodiments of the present application, and those of ordinary skill in the art may obtain other drawings based on the drawings on the premise that no creative work is done.
FIG. 1 is a flowchart of a method for determining a to-be-executed task in a supermarket scenario according to embodiment one of the present application.
FIG. 2 is a flowchart of a method for determining a to-be-executed task in a supermarket scenario according to embodiment two of the present application.
FIG. 3 is a flowchart of a method for determining a to-be-executed task in a supermarket scenario according to embodiment three of the present application.
FIG. 4 is a structure diagram of an apparatus for determining a to-be-executed task in a supermarket scenario according to embodiment four of the present application.
FIG. 5 is a structure diagram of an electronic device for implementing a method for determining a to-be-executed task in a supermarket scenario according to an embodiment of the present application.

### DETAILED DESCRIPTION

Technical solutions of embodiments of the present application are described below in conjunction with the drawings in the embodiments of the present application. Apparently, the embodiments described below are part, not all of the embodiments of the present application. Based on the embodiments in the present application, all other embodiments obtained by those of ordinary skill in the art without creative work should be within the scope of the present application.

It is to be noted that terms such as "first" and "second" in the description, claims, and drawings of the present application are used to distinguish between similar objects and are not necessarily used to describe particular order or a particular sequence. It is to be understood that data used in this way is interchangeable when appropriate so that embodiments of the present application described herein can be implemented in order not illustrated or described herein. In addition, the terms "including" and "having" and any variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

### Embodiment one

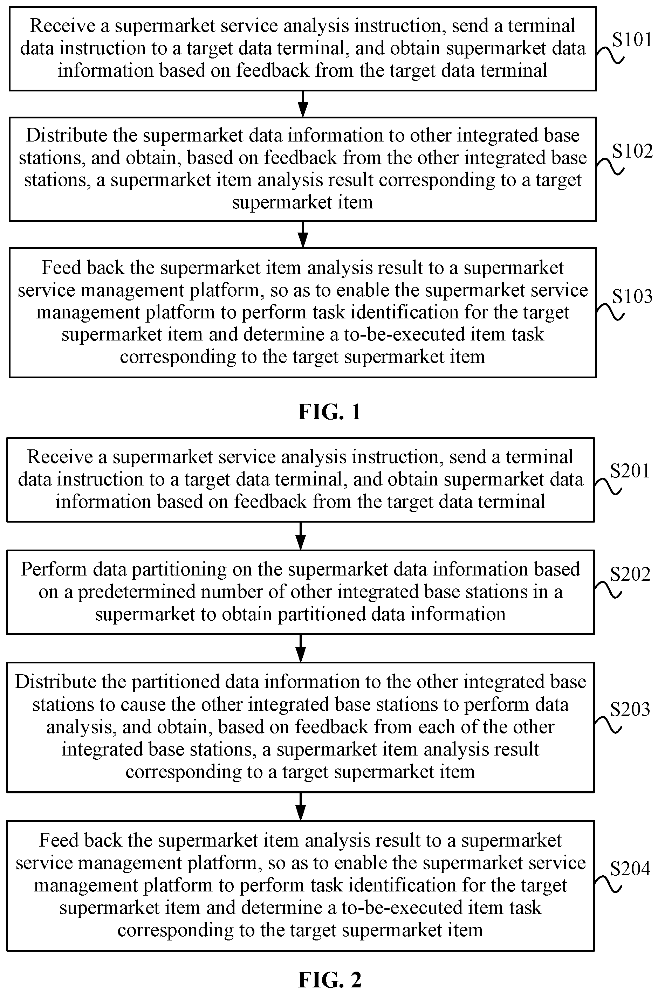

FIG. 1 is a flowchart of a method for determining a to-be-executed task in a supermarket scenario according to embodiment one of the present application. The embodiment is suitable for alleviating bandwidth pressures and computing power pressures in a supermarket and determining to-be-processed item tasks. The method may be performed by an apparatus for determining a to-be-executed task in a supermarket scenario. The apparatus for determining a to-be-executed task in a supermarket scenario may be implemented in the form of hardware and/or software and may be configured in an electronic device. As shown in FIG. 1, the method includes the steps described below.

In S101, a supermarket service analysis instruction is received, a terminal data instruction is sent to a target data terminal, and supermarket data information is obtained based on feedback from the target data terminal.

In the present application, the supermarket includes a supermarket service management platform, multiple integrated base stations, and multiple target data terminals. The supermarket service management platform includes a narrowband service server, a broadband service server, and a computing power service server. Each of the multiple integrated base stations includes a broadband communication module, a narrowband communication module, and a computing power module. Each of the multiple integrated base stations is installed in a respective one of the supermarket regions into which the supermarket is divided and is configured to provide communication services and coordinate computing power resources with neighboring supermarket base stations. The narrowband communication module is configured for small-volume data communication, such as transmission of price tag information of electronic shelf labels (ESLs), device parameter information, and device control instructions. The broadband communication module is configured for large-volume data communication, such as the transmission of image data and video data collected by cameras and robots. The computing power module is configured to analyze and process image data, video data, and the like. The target data terminal is a data acquisition apparatus in the supermarket, such as a monitor, a mobile robot, or various types of sensing devices.

The supermarket service analysis instruction may be a service analysis instruction generated and sent by the supermarket service management platform. The terminal data instruction may be instruction information for instructing the target data terminal to execute a corresponding task. The supermarket data information includes at least item attribute information corresponding to a target supermarket item. The item attribute information may include at least color information, position information, quantity information, temperature information, distance information, and placement information. The target supermarket item may be a commodity, a shopping cart, a tool, garbage, and the like in the supermarket and may be determined according to the supermarket service analysis instruction.

The supermarket service analysis instruction sent by the supermarket service management platform is received. The integrated base station sends the terminal data instruction to the target data terminal according to the supermarket service analysis instruction. Data information fed back by the target data terminal is received so that the supermarket data information can be obtained.

Exemplarily, receiving the supermarket service analysis instruction and sending the terminal data instruction to the target data terminal includes: receiving the supermarket service analysis instruction; performing instruction analysis on the supermarket service analysis instruction to determine a to-be-analyzed supermarket region in the supermarket service analysis instruction, and determining a data terminal device in the to-be-analyzed supermarket region as the target data terminal; sending the data acquisition instruction and the data configuration information to the target data terminal based on the narrowband communication module, so as to enable the target data terminal to establish a communication data channel with the integrated base station according to the data configuration information; and sending the supermarket data information through the communication data channel based on the broadband communication module.

The terminal data instruction includes the data acquisition instruction and the data configuration information.

The instruction analysis is performed on the supermarket service analysis instruction so that the to-be-analyzed supermarket region in the supermarket service analysis instruction is determined, and the data terminal device in the to-be-analyzed supermarket region is determined as the target data terminal. The data acquisition instruction and the data configuration information are sent to the target data terminal through the narrowband communication module. The target data terminal establishes the communication data channel with the integrated base station according to the data configuration information. The supermarket data information is sent by means of the communication data channel through the broadband communication module.

Exemplarily, determining the data terminal device in the to-be-analyzed supermarket region as the target data terminal includes: determining a monitoring terminal in the to-be-analyzed supermarket region as a target monitoring terminal; determining a target robot terminal in the to-be-analyzed supermarket region according to heartbeat signal information sent by all robot terminals; and determining each of the target monitoring terminal and the target robot terminal as the target data terminal.

It is to be noted that the target data terminal in the supermarket may include a fixed monitoring terminal and a movable robot terminal.

The monitoring terminal in the to-be-analyzed supermarket region is determined as the target monitoring terminal. According to the heartbeat signal information sent by all the robot terminals, the current integrated base station determines the target robot terminal in the to-be-analyzed supermarket region based on the strength of heartbeat signals. The target monitoring terminal and the target robot terminal are determined as target data terminals.

Exemplarily, sending the data acquisition instruction to the target data terminal based on the narrowband communication module includes: determining, according to the broadband communication module, broadband channel information corresponding to a broadband communication channel; determining, based on the broadband channel information, an instruction sending strategy corresponding to the data acquisition instruction; and sending the data acquisition instruction to the target data terminal based on the narrowband communication module according to the instruction sending strategy.

The integrated base station may further include the broadband communication module and the narrowband communication module. The broadband channel information includes at least the number of transmit/receive channels and currently available bandwidth.

Before sending the data acquisition instruction to the target data terminal, when multiple data acquisition instructions need to be sent through the narrowband communication module, the integrated base station may determine parameters, such as the number of transmit/receive channels and the currently available bandwidth, according to the broadband communication module, determine a narrowband instruction sending strategy according to the parameters of channels, and send these instructions in batches according to the narrowband instruction sending strategy, so as to avoid broadband channel congestion during a data reporting stage.

For example, when the broadband communication module in the integrated base station operates in an 802.11n two-transmit two-receive mode while the target data terminal operates in a single-transmit single-receive mode, the integrated base station may simultaneously notify only two target data terminals each time to report data so that it is ensured that a broadband data transmission channel is in an optimal operating state, thereby enabling the target data terminals to complete data uploading quickly. For another example, in the supermarket scenario, 9:00 a.m. is a peak shopping period for users. To ensure reliable checkout services, the integrated base station needs to actively limit network bandwidth occupied by the upload from the target data terminal. In this case, the integrated base station may notify only one target data terminal each time to access a network.

In S102, the supermarket data information is distributed to other integrated base stations, and a supermarket item analysis result corresponding to the target supermarket item is obtained based on feedback from the other integrated base stations.

The other integrated base stations may refer to all neighboring integrated base stations of the current integrated base station in the supermarket, that is, all integrated base stations in the supermarket other than the current integrated base station.

After receiving the supermarket data information sent by the target data terminal, the integrated base station may distribute the supermarket data information to the neighboring integrated base stations, that is, the other integrated base stations and request the other integrated base stations to assist in analyzing the target supermarket item in the supermarket data information. Thus, the supermarket item analysis result can be obtained. For example, the supermarket item analysis result may include a commodity quantity analysis result, a customer quantity result for a commodity region, and an analysis result indicating whether garbage is present in a passageway in the supermarket data information. With the assistance of the other integrated base stations in performing the analysis, computational pressure on the current integrated base station is significantly alleviated. Further, the efficiency and accuracy with which the supermarket item analysis result is determined can be improved.

In S103, the supermarket item analysis result is fed back to the supermarket service management platform so that the supermarket service management platform performs task identification for the target supermarket item and determines a to-be-executed item task corresponding to the target supermarket item.

The integrated base station may send the supermarket item analysis result to the supermarket service management platform. The computing power service server in the supermarket service management platform performs the task identification according to the supermarket item analysis result and a pre-formulated task distribution mechanism, so as to determine the to-be-executed item task corresponding to the target supermarket item.

According to the technical solution provided in the embodiment of the present application, the supermarket service analysis instruction is received, and the terminal data instruction is sent to the target data terminal. In addition, the supermarket data information is obtained based on the feedback from the target data terminal, where the supermarket data information includes at least the item attribute information corresponding to the target supermarket item. The supermarket data information is distributed to the other integrated base stations, and the supermarket item analysis result corresponding to the target supermarket item is obtained based on the feedback from the other integrated base stations. The other integrated base stations are configured to analyze the target supermarket item so that the current shortage of computing power resources for the target supermarket item is alleviated. Thus, the analysis efficiency is improved, and the analysis time is reduced. The supermarket item analysis result is fed back to the supermarket service management platform so that the supermarket service management platform performs the task identification for the target supermarket item and determines the to-be-executed item task corresponding to the target supermarket item. The supermarket service management platform is configured to only assist in determining the to-be-executed task based on the supermarket item analysis result, which avoids the impact of a large volume on the supermarket network. Only the supermarket item analysis result needs to be transmitted so that the to-be-executed item task is determined, thereby improving the efficiency of determining the to-be-executed task of the supermarket item and alleviating the bandwidth network pressure of the supermarket.

### Embodiment two

FIG. 2 is a flowchart of a method for determining a to-be-executed task in a supermarket scenario according to embodiment two of the present application. Based on the preceding multiple embodiments, this embodiment describes the process where the supermarket item analysis result corresponding to the target supermarket item is obtained. As shown in FIG. 2, the method includes the steps described below.

In S201, the supermarket service analysis instruction is received, the terminal data instruction is sent to the target data terminal, and the supermarket data information is obtained based on the feedback from the target data terminal.

In S202, data partitioning is performed on the supermarket data information based on a predetermined quantity of the other integrated base stations in the supermarket to obtain partitioned data information.

The number of the other integrated base stations may be obtained from the supermarket service management platform or may be obtained by broadcasting a probe packet in an uplink network of the integrated base station.

The integrated base station performs the data partitioning on the supermarket data information according to the number of the other integrated base stations, thereby obtaining pieces of the partitioned data information, where the number of the pieces of the partitioned data information is the same as the number of the other integrated base stations.

Exemplarily, performing the data partitioning on the supermarket data information based on the predetermined number of the other integrated base stations in the supermarket to obtain the partitioned data information includes: determining the number of data partitions based on the number of the other integrated base stations; and performing the data partitioning on the supermarket data information based on the number of data partitions to obtain the partitioned data information.

The number of data partitions is equal to the number of the other integrated base stations and the current integrated base station.

In the technical solution of the present application, the current integrated base station may also perform the data analysis together with the other integrated base stations. The number of data partitions is obtained by adding one to the number of the other integrated base stations so that the number of data partitions required for partitioning is obtained. Further, the supermarket data information is partitioned to obtain the partitioned data information so that the current integrated base station may also be allocated to one data partition.

In S203, the partitioned data information is distributed to the other integrated base stations so that the other integrated base stations perform the data analysis, and the supermarket item analysis result corresponding to the target supermarket item is obtained based on feedback from each of the other integrated base stations.

The partitioned data information is distributed to the other integrated base stations. Each of the other integrated base stations performs the data analysis on the partitioned data information and feeds back an analysis result to the current integrated base station. Accordingly, a partition data analysis result corresponding to each piece of the partitioned data information can be obtained. Partition data analysis results are then fused to obtain the supermarket item analysis result.

Alternatively, the partitioned data information is distributed to the other integrated base stations and the current integrated base station. The other integrated base stations and the current integrated base station perform the data analysis on the partitioned data information and feed back results to the current integrated base station. A partition data analysis result corresponding to each piece of the partitioned data information is obtained. Partition data analysis results are fused to obtain the supermarket item analysis result.

Exemplarily, performing, by the other integrated base stations, the data analysis, and obtaining, based on the feedback from each of the other integrated base stations, the supermarket item analysis result corresponding to the target supermarket item includes: performing, by the other integrated base stations, attribute comparison and analysis on item attribute information in the partitioned data information and historical item attribute information in historical partitioned data information at a previous moment, and determining item attribute change information of the target supermarket item; and determining the item attribute change information as the supermarket item analysis result.

The item attribute information and the historical item attribute information include at least item quantity information and item position information.

The process where the integrated base stations perform the data analysis may be as follows: the attribute comparison and analysis are performed on the item attribute information in the partitioned data information and the historical item attribute information at the previous moment so that the item attribute change information of the target supermarket item is determined, and further, the item attribute change information of the target supermarket item is determined as the supermarket item analysis result.

Exemplarily, distributing the partitioned data information to the other integrated base stations includes: determining partition serial number information corresponding to each piece of the partitioned data information; and based on the partition serial number information, sending partitioned data information having the same serial number to an integrated base station of the other integrated base stations that has the same sequence number.

The current integrated base station may distribute the partitioned data information to the other integrated base stations one by one according to the partition serial number information in a polling manner.

By adopting the polling distribution manner, the current integrated base station is not required to pre-collect the computing power status of the other integrated base stations in the network before distributing, which avoids the large number of data interaction processes and computational processes caused by such collection. The reason is that when a large number of integrated base stations are present in the network, the interaction processes required to maintain such computing power status information consume a significant quantity of central processing unit (CPU) resources of the base stations.

In addition, since the number of integrated base stations in the network is relatively fixed, the number of data partitions is also relatively fixed. When distributing the partitioned data, the current integrated base station preferentially distributes the partitioned data having the same serial number to the same integrated base station. Since the contents in the data partitions having the same serial number are mostly identical, an algorithm may accelerate processing based on historical information. Such a distribution manner accelerates the image algorithm, thereby improving the efficiency with which the supermarket item analysis result is determined.

Exemplarily, after based on the partition serial number information, sending the partitioned data information having the same serial number to the integrated base station of the other integrated base stations that has the same sequence number, the method further includes: determining partition reception feedback information of the integrated base station of the other integrated base stations, where the partition reception feedback information indicates rejection of partitioned information or successful reception of partitioned information; and in response to the partition reception feedback information indicating the rejection of the partitioned information, sending the partitioned data information corresponding to the rejected partitioned information to an integrated base station of the other integrated base stations that has the next sequence number, so as to enable the partitioned data information to be successfully distributed.

The reception status of the partitioned data information is determined according to the partition reception feedback information. When the partition reception feedback information indicates the rejection of the partitioned information, it is indicated that the integrated base station malfunctions. The partitioned data information is forwarded to the integrated base station of the other integrated base stations that has the next sequence number until all of the partitioned data information is successfully distributed.

In S204, the supermarket item analysis result is fed back to the supermarket service management platform so that the supermarket service management platform performs the task identification for the target supermarket item and determines the to-be-executed item task corresponding to the target supermarket item.

According to the technical solution of the present application, the data partitioning is performed on the supermarket data information based on the predetermined number of the other integrated base stations in the supermarket to obtain the partitioned data information. The partitioned data information is distributed to the other integrated base stations so that the other integrated base stations perform the data analysis, and the supermarket item analysis result corresponding to the target supermarket item is obtained based on the feedback from each of the other integrated base stations. Thus, hardware, software, and scheduling management of the computing power resources are comprehensively integrated into all of the integrated base stations, thereby satisfying computing power demands of supermarket services while ensuring reliable running of the supermarket network system.

### Embodiment three

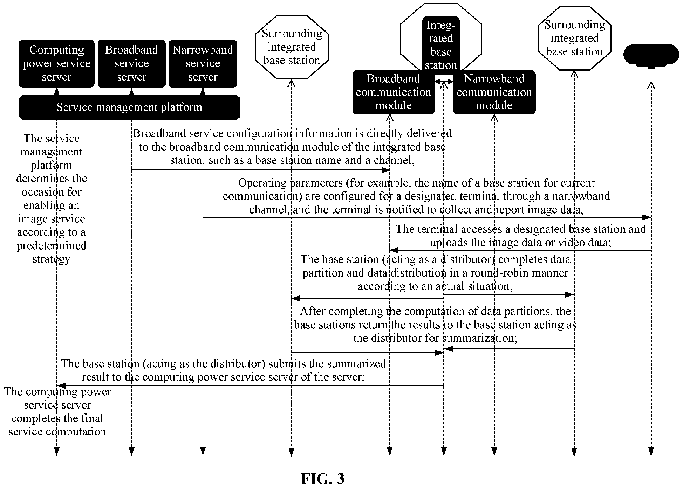

FIG. 3 is an overall schematic diagram of a method for determining a to-be-executed task in a supermarket scenario according to embodiment three of the present application. As shown in FIG. 3, the method is an optional implementation method of the technical solution of the present application. A complete execution procedure of the method includes the steps described below.

In S301, when a supermarket analysis service is in a disabled state, the broadband communication module and the computing power module in the integrated base station are in a sleep state, and the integrated base station acquires the number of surrounding other integrated base stations through the supermarket service management platform or by broadcasting the probe packet in the uplink network of the integrated base station. A broadband communication module of the target data terminal (such as a camera device or a robot device) is in a sleep state, and in this case, the target data terminal only captures images or videos periodically according to preconfigured requirements and stores the collected supermarket data information in a local cache.

In S302, when the supermarket service management platform enables the supermarket analysis service according to a service analysis strategy, the narrowband service server first issues the terminal data instruction to one or more selected cameras or robots via the narrowband communication module of the integrated base station. Meanwhile, the broadband service server starts the broadband module of the integrated base station and configures the broadband module (for example, a WLAN radio frequency channel and a media access control (MAC) whitelist).

An embedded narrowband module of a robot in a roaming state periodically sends a heartbeat signal. The integrated base station determines, according to the strength of the received heartbeat signal, the integrated base station to which the robot belongs and reports the determination result to the supermarket service management platform. Subsequently, the supermarket service management platform may issue a control instruction to the robot through the corresponding integrated base station.

The service analysis strategy here may be modified according to the operating states of actual services of a user and the demands of the user. The purpose is to avoid conflicts between a computing power service and the user's narrowband service (for example, the delivery of price tag information of an ELS) and broadband service (for example, the distribution of video files of other liquid crystal display (LCD) price tags).

The integrated base station provides the supermarket service management platform with an interface for querying the states of internal modules, enabling the supermarket service management platform to obtain real-time operating states of multiple internal modules of the integrated base station so that multiple application modules of the supermarket service management platform can accurately select service enabling time.

In S303, after the supermarket service analysis instruction from the supermarket service management platform is received, on the one hand, the integrated base station sends terminal data instructions for cameras, robots, and other devices to designated target data terminals through the narrowband communication module, and on the other hand, the integrated base station configures operating parameters of the broadband communication module according to the requirements of the supermarket service management platform and starts the broadband communication module, so as to prepare for receiving data sent from the target data terminals. When multiple terminal data instructions need to be sent through the narrowband communication module, the integrated base station may send these terminal data instructions in batches according to the parameters of the data channels of the broadband module, such as the number of transmit/receive channels and the currently available bandwidth, so as to avoid the broadband channel congestion.

In S304, after the target data terminals, such as the cameras and the robots, receive the terminal data instructions through integrated narrowband modules, embedded broadband communication modules of the target data terminals are started. After broadband communication channels are established between the target data terminals and the integrated base station, the terminals upload, through the broadband channels, supermarket data information that the terminals pre-collect or collect in real time, such as image data and depth information, to the integrated base station.

In S305, after receiving the supermarket data information submitted by the terminals, the integrated base station performs the partition on the data according to the number of surrounding integrated base stations detected in advance. For example, if one integrated base station detects N integrated base stations that surround it and are capable of processing the computing power service, the integrated base station partitions the data into N+1 parts. In this case, the integrated base station acts as a distributor.

In S306, the integrated base station acting as the distributor distributes the partitioned data information to the surrounding integrated base stations one by one in a round-robin manner. If a surrounding integrated base station refuses to receive the partitioned data information or does not respond during the distribution, the integrated base station attempts to distribute the partitioned data information to the next integrated base station until all of the partitioned data information can be successfully distributed.

In S307, each integrated base station processes the received partitioned data information by using its own computing power resources. For example, original two-dimensional image information is converted into image information including a three-dimensional model in conjunction with depth data. After the processing of the received partitioned data is completed, each integrated base station returns the processing result to the distributor.

In S308, after summarizing the processing results of all of the partitioned data information, the integrated base station acting as the distributor obtains the supermarket item analysis result. For example, three-dimensional information of all key objects in an original image captured by a camera is obtained, such as whether an available space exists in the arrangement of commodities on a shelf. Subsequently, the integrated base station submits the final supermarket item analysis result to the computing power service server of the supermarket service management platform.

In S309, the computing power service server performs service identification according to the supermarket item analysis result reported by the integrated base station. For example, if the supermarket item analysis result indicates that a large available space exists on the shelf for a corresponding commodity, it may be determined that the sales of the commodity are relatively high, and the to-be-executed task for the corresponding commodity may be that the commodity needs to be replenished in time.

In S310, so far, one processing procedure for determining the to-be-executed task of the supermarket item is completed.

### Embodiment four

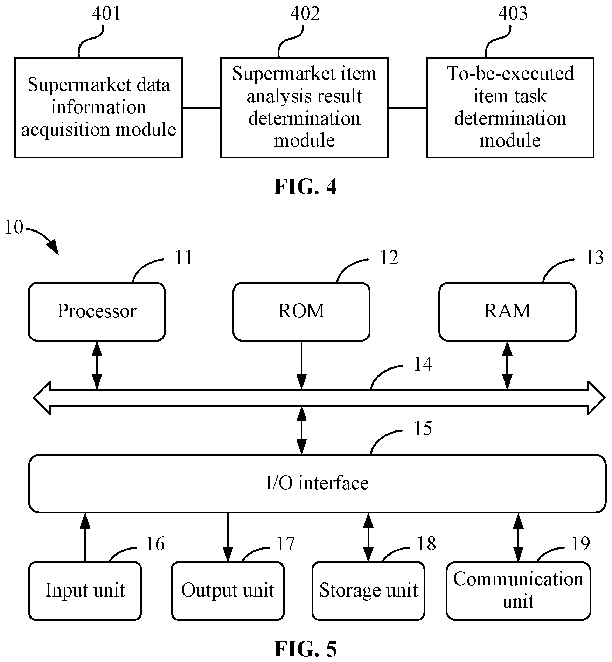

FIG. 4 is a structure diagram of an apparatus for determining a to-be-executed task in a supermarket scenario according to embodiment four of the present application. As shown in FIG. 4, the apparatus includes: a supermarket data information acquisition module 401 configured to receive a supermarket service analysis instruction, send a terminal data instruction to a target data terminal, and obtain supermarket data information based on feedback from the target data terminal, where the supermarket data information includes at least item attribute information corresponding to a target supermarket item; a supermarket item analysis result determination module 402 configured to distribute the supermarket data information to other integrated base stations and obtain, based on feedback from the other integrated base stations, a supermarket item analysis result corresponding to the target supermarket item; and a to-be-executed item task determination module 403 configured to feed back the supermarket item analysis result to a supermarket service management platform, so as to enable the supermarket service management platform to perform task identification for the target supermarket item and determine a to-be-executed item task corresponding to the target supermarket item.

According to the technical solution provided in the embodiment of the present application, the supermarket service analysis instruction is received, and the terminal data instruction is sent to the target data terminal. In addition, the supermarket data information is obtained based on the feedback from the target data terminal, where the supermarket data information includes at least the item attribute information corresponding to the target supermarket item. The supermarket data information is distributed to the other integrated base stations, and the supermarket item analysis result corresponding to the target supermarket item is obtained based on the feedback from the other integrated base stations. The other integrated base stations are configured to analyze the target supermarket item so that the current shortage of computing power resources for the target supermarket item is alleviated. Thus, the analysis efficiency is improved, and the analysis time is saved. The supermarket item analysis result is fed back to the supermarket service management platform so that the supermarket service management platform performs the task identification for the target supermarket item and determines the to-be-executed item task corresponding to the target supermarket item. The supermarket service management platform is configured to only assist in determining the to-be-executed task based on the supermarket item analysis result, which avoids the impact of a large volume of service data on a supermarket network. Only the supermarket item analysis result needs to be transmitted so that the to-be-executed item task can be determined, thereby improving the efficiency with which the to-be-executed task of the supermarket item is determined and alleviating the bandwidth network pressure of the supermarket.

Optionally, the supermarket item analysis result determination module 402 includes: a partitioned data information obtaining unit configured to perform data partitioning on the supermarket data information based on a predetermined number of the other integrated base stations in a supermarket to obtain partitioned data information; and a supermarket item analysis result determination unit configured to: distribute the partitioned data information to the other integrated base stations to cause the other integrated base stations to perform data analysis, and obtain, based on feedback from each of the other integrated base stations, the supermarket item analysis result corresponding to the target supermarket item.

Optionally, the supermarket item analysis result determination unit is configured to: control the other integrated base stations to perform attribute comparison and analysis on item attribute information in the partitioned data information and historical item attribute information in historical partitioned data information at a previous moment to determine item attribute change information of the target supermarket item, where the item attribute information and the historical item attribute information include at least item quantity information and item position information; and determine the item attribute change information as the supermarket item analysis result.

Optionally, the supermarket item analysis result determination unit includes: a partition serial number information determination sub-unit configured to determine partition serial number information corresponding to each piece of the partitioned data information; and a partition serial number information sending sub-unit configured to send, based on the partition serial number information, partitioned data information having the same serial number to an integrated base station of the other integrated base stations that has the same sequence number.

Optionally, the partition serial number information sending sub-unit is further configured to: determine partition reception feedback information of the integrated base station of the other integrated base stations, where the partition reception feedback information indicates rejection of partitioned information or successful reception of partitioned information; and in response to the partition reception feedback information indicating the rejection of the partitioned information, send the partitioned data information corresponding to the rejected partitioned information to an integrated base station of the other integrated base stations that has the next sequence number, so that all the partitioned data information is successfully distributed.

Optionally, the integrated base station includes a broadband communication module and a narrowband communication module, the terminal data instruction includes a data acquisition instruction and data configuration information, and the supermarket data information acquisition module 401 includes: a supermarket service analysis instruction reception unit configured to receive the supermarket service analysis instruction; a supermarket service analysis instruction parsing unit configured to perform instruction analysis on the supermarket service analysis instruction to determine a to-be-analyzed supermarket region in the supermarket service analysis instruction and determine a data terminal device in the to-be-analyzed supermarket region as the target data terminal; a data acquisition instruction sending unit configured to send the data acquisition instruction to the target data terminal based on the narrowband communication module; and a data configuration information sending unit configured to: send the data configuration information to the target data terminal based on the broadband communication module so as to enable the target data terminal to establish a communication data channel with the integrated base station, and send the supermarket data information through the communication data channel.

Optionally, the supermarket service analysis instruction parsing unit includes: a target monitoring terminal determination sub-unit configured to determine a monitoring terminal in the to-be-analyzed supermarket region as a target monitoring terminal; a target robot terminal determination sub-unit configured to determine a target robot terminal in the to-be-analyzed supermarket region according to heartbeat signal information sent by all robot terminals; and a target data terminal determination sub-unit configured to determine the target monitoring terminal and the target robot terminal as target data terminals.

Optionally, the data acquisition instruction sending unit is configured to: determine, according to the broadband communication module, broadband channel information corresponding to a broadband communication channel, where the broadband channel information includes at least the number of transmit/receive channels and currently available bandwidth; determine, based on the broadband channel information, an instruction sending strategy corresponding to the data acquisition instruction; and send the data acquisition instruction to the target data terminal based on the narrowband communication module according to the instruction sending strategy.

The embodiment of the present application provides the apparatus for determining a to-be-executed task in a supermarket scenario. The apparatus for determining a to-be-executed task in a supermarket scenario may perform the method for determining a to-be-executed task in a supermarket scenario provided in any embodiment of the present application and has function modules corresponding to the method performed.

### Embodiment five

FIG. 5 shows a structure diagram of an electronic device 10 that may be configured to implement the embodiments of the present application. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellphone, a smartphone, a wearable device (such as a helmet, glasses, and a watch), and other similar computing apparatuses. The components as illustrated herein, and connections, relationships, and functions thereof are only examples and are not intended to limit the implementation of the present application described and/or required herein.

As shown in FIG. 5, the electronic device 10 includes at least one processor 11 and a memory communicatively connected to the at least one processor 11, such as a read-only memory (ROM) 12 and a random-access memory (RAM) 13. The memory stores a computer program executable by the at least one processor. The at least one processor 11 may perform various appropriate actions and processing according to a computer program stored in the ROM 12 or a computer program loaded into the RAM 13 from a storage unit 18. The RAM 13 may also store various programs and data required for the operation of the electronic device 10. The at least one processor 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard and a mouse, an output unit 17 such as various types of displays and speakers, the storage unit 18 such as a magnetic disk or an optical disk, and a communication unit 19 such as a network card, a modem, or a wireless communication transceiver. The communication unit 19 allows the electronic device 10 to exchange information/data with other devices over a computer network such as the Internet and/or various telecommunications networks.

The at least one processor 11 may be various general-purpose and/or special-purpose processing components having processing and computing capabilities. Examples of the processor 11 include, but are not limited to, a central processing unit (CPU), a graphics processing unit (GPU), various special-purpose artificial intelligence (AI) computing chips, various processors executing machine learning models and algorithms, a digital signal processor (DSP), and any appropriate processor, controller, or microcontroller. The at least one processor 11 performs various methods and processing described above, such as the method for determining a to-be-executed task in a supermarket scenario.

In some embodiments, the method for determining a to-be-executed task in a supermarket scenario may be implemented as computer programs tangibly contained in a computer-readable storage medium such as the storage unit 18. In some embodiments, part or all of the computer programs may be loaded and/or installed onto the electronic device 10 via the ROM 12 and/or the communication unit 19. When the computer programs are loaded to the RAM 13 and executed by the at least one processor 11, one or more steps of the method for determining a to-be-executed task in a supermarket scenario described above may be performed. Alternatively, in other embodiments, the at least one processor 11 may be configured, in any other appropriate manner (for example, by firmware), to perform the method for determining a to-be-executed task in a supermarket scenario.

The various embodiments of the systems and techniques described above herein may be implemented in digital electronic circuitry, integrated circuitry, a field-programmable gate array (FPGA), an application-specific integrated circuit (ASIC), application specific standard product (ASSP), a system on a chip (SOC), a complex programmable logic device (CPLD), computer hardware, firmware, software, and/or a combination thereof. These embodiments may include implementations in one or more computer programs. The one or more computer programs are executable and/or interpretable on a programmable system including at least one programmable processor. The at least one programmable processor may be a special-purpose or general-purpose programmable processor for receiving data and instructions from a memory system, at least one input apparatus and at least one output apparatus and transmitting the data and the instructions to the memory system, the at least one input apparatus, and the at least one output apparatus.

Computer programs for the implementation of the methods of the present application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by the processor. The computer programs may be executed entirely on a machine, partly on a machine, as a stand-alone software package partly on a machine and partly on a remote machine, or entirely on a remote machine or a server.

In the context of the present application, a computer-readable storage medium may be a tangible medium that may contain or store a computer program that is used by or in conjunction with a system, apparatus, or device that executes instructions. The computer-readable storage medium may include, but is not limited to, an electronic, magnetic, optical, electromagnetic, infrared, or semiconductor system, apparatus, or device, or any appropriate combination thereof. Alternatively, the computer-readable storage medium may be a machine-readable signal medium. Examples of the machine-readable storage medium may include an electrical connection based on one or more wires, a portable computer disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof.

In order that interaction with the user is provided, the systems and techniques described herein may be implemented in the electronic device. The electronic device has a display apparatus (for example, a cathode-ray tube (CRT) or a liquid-crystal display (LCD) monitor) for displaying information to the user; and a keyboard and a pointing apparatus (for example, a mouse or a trackball) through which the user may provide input for the electronic device. Other types of apparatuses may also be configured to provide the interaction with the user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which the user may interact with the embodiments of the systems and techniques described herein), or a computing system including any combination of such back-end component, middleware component, or front-end component. Components of a system may be interconnected by any form or medium of digital data communication (for example, a communication network). Examples of the communication network include a local area network (LAN), a wide area network (WAN), a blockchain network, and the Internet.

The computing system may include a client and a server. The client and the server are generally remote from each other and typically interact through a communication network. The relationship between the client and the server is generated by computer programs that run on the corresponding computer and have a client-server relationship with each other. The server may be a cloud server, also referred to as a cloud computing server or a cloud host. As a host product in a cloud computing service system, the server eliminates the defects of difficult management and weak service scalability in conventional physical host and virtual private server (VPS) services.

It is to be understood that the preceding various forms of flows may be used with steps reordered, added, or removed. For example, the steps recorded in the present application may be performed in parallel, in sequence, or in different order as long as the desired results of the technical solutions in the present application can be achieved. The sequence in which these steps are performed is not limited herein.

## Claims

1. A method for determining a to-be-executed task in a supermarket scenario, the method being applied to an integrated base station and comprising:
receiving a supermarket service analysis instruction, sending a terminal data instruction to a target data terminal, and obtaining supermarket data information based on feedback from the target data terminal, wherein the supermarket data information comprises at least item attribute information corresponding to a target supermarket item;
distributing the supermarket data information to other integrated base stations, and obtaining, based on feedback from the other integrated base stations, a supermarket item analysis result corresponding to the target supermarket item; and
feeding back the supermarket item analysis result to a supermarket service management platform, so as to enable the supermarket service management platform to perform task identification for the target supermarket item and determine a to-be-executed item task corresponding to the target supermarket item.

2. The method according to claim 1, wherein distributing the supermarket data information to the other integrated base stations, and obtaining, based on the feedback from the other integrated base stations, the supermarket item analysis result corresponding to the target supermarket item comprises:
performing data partitioning on the supermarket data information based on a predetermined number of the other integrated base stations in a supermarket to obtain partitioned data information; and
distributing the partitioned data information to the other integrated base stations to cause the other integrated base stations to perform data analysis, and obtaining, based on feedback from each of the other integrated base stations, the supermarket item analysis result corresponding to the target supermarket item.

3. The method according to claim 2, wherein performing the data analysis by the other integrated base stations, and obtaining, based on the feedback from each of the other integrated base stations, the supermarket item analysis result corresponding to the target supermarket item comprises:
performing, by the other integrated base stations, attribute comparison and analysis on item attribute information in the partitioned data information and historical item attribute information in historical partitioned data information at a previous moment to determine item attribute change information of the target supermarket item, wherein the item attribute information and the historical item attribute information comprise at least item quantity information and item position information; and
determining the item attribute change information as the supermarket item analysis result.

4. The method according to claim 2, wherein distributing the partitioned data information to each of the other integrated base stations comprises:
determining partition serial number information corresponding to each piece of the partitioned data information; and
based on the partition serial number information, sending partitioned data information having a same serial number to an integrated base station of the other integrated base stations that has a same sequence number.

5. The method according to claim 4, wherein after based on the partition serial number information, sending the partitioned data information having the same serial number to the integrated base station of the other integrated base stations that has the same sequence number, the method further comprises:
determining partition reception feedback information of the integrated base station of the other integrated base stations, wherein the partition reception feedback information indicates rejection of partitioned information or successful reception of partitioned information; and
in response to the partition reception feedback information indicating the rejection of the partitioned information, sending the partitioned data information corresponding to the rejected partitioned information to an integrated base station of the other integrated base stations that has a next sequence number, so as to enable the partitioned data information to be successfully distributed.

6. The method according to claim 1, wherein the integrated base station comprises a broadband communication module and a narrowband communication module, the terminal data instruction comprises a data acquisition instruction and data configuration information, and receiving the supermarket service analysis instruction and sending the terminal data instruction to the target data terminal comprises:
receiving the supermarket service analysis instruction;
performing instruction analysis on the supermarket service analysis instruction to determine a to-be-analyzed supermarket region in the supermarket service analysis instruction, and determining a data terminal device in the to-be-analyzed supermarket region as the target data terminal;
sending the data acquisition instruction and the data configuration information to the target data terminal based on the narrowband communication module, so as to enable the target data terminal to establish a communication data channel with the integrated base station according to the data configuration information; and
sending the supermarket data information through the communication data channel based on the broadband communication module.

7. The method according to claim 6, wherein the target data terminal comprises a monitoring terminal and a robot terminal, and determining the data terminal device in the to-be-analyzed supermarket region as the target data terminal comprises:
determining a monitoring terminal in the to-be-analyzed supermarket region as a target monitoring terminal;
determining a target robot terminal in the to-be-analyzed supermarket region according to heartbeat signal information sent by all robot terminals; and
determining the target monitoring terminal and the target robot terminal as target data terminals.

8. The method according to claim 6, wherein sending the data acquisition instruction to the target data terminal based on the narrowband communication module comprises:
determining, according to the broadband communication module, broadband channel information corresponding to a broadband communication channel, wherein the broadband channel information comprises at least a number of transmit/receive channels and currently available bandwidth;
determining, based on the broadband channel information, an instruction sending strategy corresponding to the data acquisition instruction; and
sending the data acquisition instruction to the target data terminal based on the narrowband communication module according to the instruction sending strategy.

9. An apparatus for determining a to-be-executed task in a supermarket scenario, the apparatus being applied to an integrated base station and comprising:
a supermarket data information acquisition module configured to receive a supermarket service analysis instruction, send a terminal data instruction to a target data terminal, and obtain supermarket data information based on feedback from the target data terminal, wherein the supermarket data information comprises at least item attribute information corresponding to a target supermarket item;
a supermarket item analysis result determination module configured to distribute the supermarket data information to other integrated base stations and obtain, based on feedback from the other integrated base stations, a supermarket item analysis result corresponding to the target supermarket item; and
a to-be-executed item task determination module configured to feed back the supermarket item analysis result to a supermarket service management platform, so as to enable the supermarket service management platform to perform task identification for the target supermarket item and determine a to-be-executed item task corresponding to the target supermarket item.

10. An electronic device, comprising:
at least one processor; and
a memory communicatively connected to the at least one processor;
wherein the memory stores a computer program executable by the at least one processor, and the computer program is executed by the at least one processor, so as to enable the at least one processor to perform the method for determining a to-be-executed task in a supermarket scenario according to any one of claims 1 to 8.
